# FASCICULE DE BREVET EUROPEEN

(11) **EP 2 901 648 B1**
(45) Date de publication et mention de la délivrance du brevet: **02.11.2016**
(21) Numéro de dépôt: 13766572.5
(22) Date de dépôt: 27.09.2013
(51) Int. Cl.: H04L 12/46, H04W 4/00, H04W 12/08, H04W 76/02, H04L 29/06

(54) **PROCÉDÉ DE MISE EN RELATION VIRTUELLE DE DEUX PERSONNES, MEDIA ET SYSTÈME CORRESPONDANT**
VERFAHREN ZUR VIRTUELLEN VERBINDUNGSHERSTELLUNG ZWISCHEN ZWEI PERSONNEN, ENTSPRECHENDES MEDIUM UND SYSTEM
METHOD FOR ESTABLISHING A VIRTUAL RELATIONSHIP BETWEEN TWO PERSONS, CORRESPONDING MEDIA AND SYSTEM

(30) Priorité: 27.09.2012 EP 12306174
(43) Date de publication de la demande: 05.08.2015
(73) Titulaire: GEMALTO SA, 92190 Meudon (FR)
(72) Inventeur: GEMETO, Marc, F-13705 La Ciotat (FR); FINE, Jean-Yves, F-13705 La Ciotat (FR)
(74) Mandataire: Scheer, Luc
(86) Numéro de dépôt international: PCT/EP2013/070269
(87) Numéro de publication internationale: WO 2014/049147

(56) Documents cités:
- FR-A1- 2 903 545
- US-B1- 8 219 028

## Description

Le domaine de l'invention est celui des télécommunications et concerne notamment un procédé de mise en relation virtuelle de deux personnes physiques, ainsi qu'un système et un média correspondants.

L'invention a pour objectif de permettre à au moins deux personnes d'échanger des documents ou de rentrer en communication par l'intermédiaire d'Internet.

On se placera dans la suite de cette description dans le cadre d'une personne qui se rend à un colloque, un salon, une foire ou à un séminaire. Cette personne y rencontre d'autres personnes qui peuvent lui proposer de lui transmettre par voie électronique des documents (présentations de produits, brochures, documents sous forme pdf, ...) plutôt que de lui donner en mains propres des documents papiers. Réciproquement, une personne qui se rend à un salon de recrutement n'a pas toujours son CV à jour avec elle (sous forme papier) et elle ne peut donc le donner à son interlocuteur. D'autres documents peuvent avoir à être échangés entre ces personnes à titre confidentiel (tarifs de produits ou de services par exemple).

Or, cette personne ne dispose pas nécessairement d'une adresse électronique (adresse Internet) à laquelle ces autres personnes peuvent envoyer des documents ou des liens Internet. De plus, certaines personnes ne souhaitent pas communiquer leur adresse Internet à une personne qui leur est étrangère. Il n'existe alors aucun moyen à ces personnes pour échanger des documents sous forme électronique.

Dans un autre domaine, on connaît, dans le domaine des télécommunications, la technologie NFC. Celle-ci permet à un utilisateur d'un terminal, généralement mobile tel qu'un téléphone portable ou un smartphone, d'effectuer des paiements ou de transmettre des informations à un lecteur. Ces informations sont par exemple des informations personnelles telles que le nom et le prénom du détenteur du terminal. Ces informations sont classiquement stockées dans une carte SIM (UICC dans la suite de cette description) connectée au terminal (par voie filaire ou hertzienne), soit comprise dans le terminal (extractible), soit intégrée (non extractible, comprise dans un circuit intégré soudé dans le terminal).

Les informations personnelles peuvent également être stockées dans un élément non alimenté, tel qu'une carte comprenant un tag. Le tag peut également être collé sur le corps de carte. Le tag comprend une mémoire dans laquelle sont stockés le nom et le prénom de son titulaire, et éventuellement son adresse ou son numéro de téléphone.

Différents sites Internet tels que http://www.ciblesperso.com par exemple proposent à des internautes de créer leur propres tags, compatibles NFC.

La personne désirant obtenir un tag entre ses données personnelles sur un site (nom, prénom, adresse, n° de téléphone,...) et une carte NFC lui est ensuite envoyée par courrier postal. Cette personne peut alors transmettre ses données personnelles à un lecteur, par exemple à un terminal (téléphone mobile par exemple) d'une autre personne, en approchant simplement sa carte du terminal, la communication s'effectuant par voie NFC. Ce concept est proche de la transmission d'une carte de visite électronique.

Une transmission de carte de visite électronique peut également s'opérer entre deux téléphones mobiles, en activant une fonction dédiée permettant à deux utilisateurs d'échanger leurs données personnelles. Cette transmission s'opère également par voie NFC, en approchant les deux téléphones, les applications NFC installées dans les téléphones stockant (par exemple dans l'UICC) les données reçues de l'autre téléphone. Les données personnelles à transmettre sont stockées soit dans le téléphone, soit dans l'UICC.

Le document US décrit un procédé qui permet à des utilisateurs d'appareils mobiles d'être en mesure de communiquer des informations, telles que échanger des adresses e-mail ou numéros de téléphone à courte distance, puis échanger d'autres informations, telles que des informations plus privées (qui pourraient inclure des numéros de téléphone), par courrier électronique.

Le problème que se propose de résoudre la présente invention est le suivant : permettre à une personne disposant d'une carte NFC comportant ses données personnelles ou d'un terminal mobile ayant une fonctionnalité NFC (et comprenant des données personnelles de son titulaire) et qui souhaite être mise en relation avec une autre personne, par exemple pour échanger plus tard des documents, sans avoir à s'échanger nécessairement d'adresses Internet personnelles.

A ce titre, la présente invention propose notamment un procédé de mise en relation virtuelle de deux personnes, la première des personnes détenant un premier dispositif NFC et la seconde des personnes détenant un second dispositif NFC. L'un des dispositifs NFC est un terminal de télécommunications comprenant une application et chacun des dispositifs NFC comprend l'identité de la personne qui le détient.

Selon l'invention, le procédé consiste à :
- Transmettre du premier dispositif NFC au second dispositif NFC l'identité de la première personne;
- Transmettre du second dispositif NFC au premier dispositif NFC l'identité de la seconde personne ;
- Générer, à l'aide de l'application, un secret partagé entre les personnes, le secret partagé permettant d'accéder à un espace Internet partagé entre ces personnes ;
- Stocker le secret partagé dans les dispositifs NFC, avec une référence relative à leur mise en relation.

Dans un mode de mise en oeuvre avantageux, la référence relative à la mise en relation virtuelle est la date à laquelle les personnes ont échangé leurs identités.

Dans un autre mode de mise en oeuvre, la référence relative à la mise en relation virtuelle est le lieu où les personnes ont échangé leurs identités.

Le terminal de télécommunications est préférentiellement un terminal mobile.

Dans un mode de mise en oeuvre préférentiel, le secret partagé est un identifiant associé à un mot de passe.

L'invention concerne également un terminal de télécommunications comprenant une application destinée à permettre une mise en relation virtuelle de deux personnes, le terminal de télécommunications comprenant l'identité d'une première des personnes, l'application étant apte à lire l'identité de la seconde des personnes, l'identité de la seconde des personnes étant stockée dans un dispositif NFC, l'application comprenant des moyens pour :
- transmettre du terminal de télécommunications au dispositif NFC l'identité de la première des personnes ;
- participer à la génération d'un secret partagé entre les personnes, le secret partagé permettant d'accéder à un espace Internet partagé entre les personnes ;
- stocker le secret partagé dans le terminal de télécommunications et dans le dispositif NFC, avec une référence relative à la mise en relation.

Comme précédemment, la référence relative à la mise en relation virtuelle est la date à laquelle ou le lieu où les personnes ont échangé leurs identités.

Le secret partagé est préférentiellement un identifiant associé à un mot de passe.

L'invention concerne également un média lisible par ordinateur comprenant un logiciel comprenant des instructions pour permettre une mise en relation virtuelle de deux personnes possédant chacune un dispositif NFC, l'un des dispositifs NFC étant un terminal de télécommunications comprenant l'identité d'une première des personnes, l'autre des dispositifs NFC comprenant l'identité de la seconde des personnes, le logiciel étant destiné à être installé dans le terminal de télécommunications et apte à lire l'identité de la seconde des personnes. Les instructions sont destinées à:
- transmettre du terminal de télécommunications au dispositif NFC l'identité de la première des personnes ;
- participer à la génération d'un secret partagé entre les personnes, le secret partagé permettant d'accéder à un espace Internet partagé entre les personnes ;
- stocker le secret partagé dans le terminal de télécommunications et dans le dispositif NFC, avec une référence relative à la mise en relation virtuelle.

D'autres caractéristiques et avantages de l'invention apparaîtront à la lecture de la description suivante d'un mode de mise en oeuvre de l'invention, donné à titre illustratif et non limitatif, et des figures annexées dans lesquelles :
- La figure 1 représente un système mettant en oeuvre le procédé selon la présente invention ;
- La figure 2 montre le déroulement du procédé selon la présente invention.

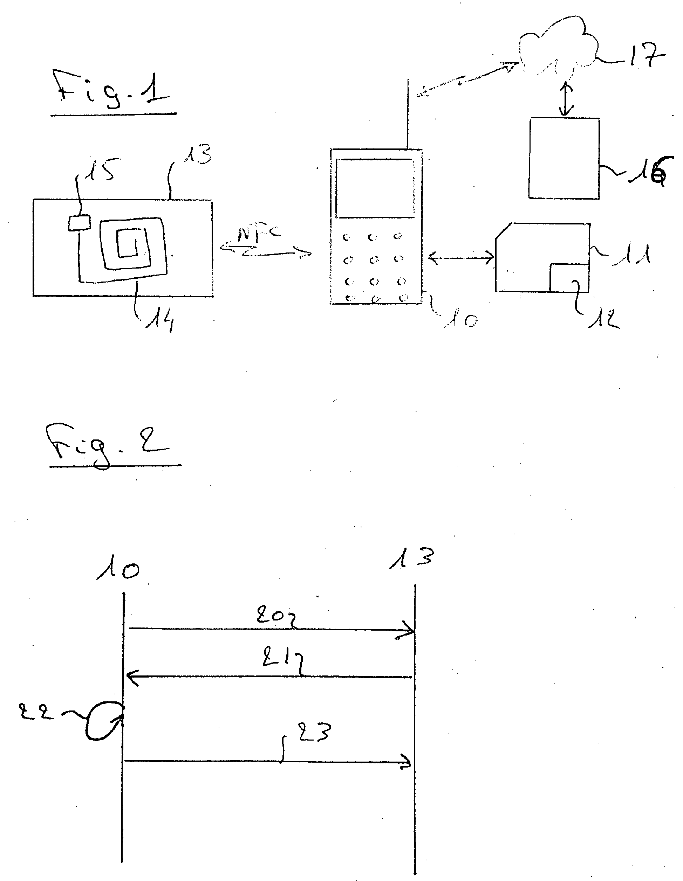

La figure 1 représente un système mettant en oeuvre le procédé selon la présente invention.

Sur cette figure est représenté un terminal de télécommunications 10, par exemple un terminal portable apte à coopérer avec un réseau cellulaire tel qu'un réseau GSM ou UMTS. Le terminal portable 10 coopère avec un élément de sécurité 11 de type UICC ou e-UICC (pour « Embedded UICC » en anglais - « UICC intégré » en français). Un e-UICC se.distingue d'un UICC classique par le fait qu'il est intégré dans le terminal 10 et non séparable de celui-ci. Il s'agit typiquement d'un UICC soudé.

Cet élément de sécurité 11 comprend de manière connue les identifiants IMSI/Ki permettant au détenteur du terminal 10 de s'authentifier auprès du réseau de son opérateur de téléphonie mobile.

L'élément de sécurité 11 renferme ici une application 12 destinée à permettre une mise en relation virtuelle de deux personnes. La première de ces personnes est le détenteur du terminal 10.

La seconde de ces personnes détient un dispositif NFC 13, ici constitué par une carte NFC. La carte NFC 13 peut être un simple support physique en plastique sur lequel est apposé (collé) un tag NFC. L'antenne 14 et la puce 15 du dispositif NFC 13 peuvent également être intégrés dans le corps de carte.

Le dispositif NFC 13 communique via NFC, comme il sera décrit par la suite, avec le terminal 10.

Le terminal 10 comprend l'identité de son titulaire. On entend par identité toute information permettant de le distinguer d'une autre personne, par exemple son nom et son numéro de téléphone. Ces identités peuvent être enregistrées dans le terminal 10, dans l'élément de sécurité 11 ou dans l'application 12.

De même, le dispositif NFC 13 comprend l'identité de son titulaire (l'identité de la seconde personne est stockée dans la mémoire 15).

Le terminal 10 comporte une application (qui peut être intégrée dans l'application 12) apte à lire l'identité stockée dans le dispositif NFC 13. Cette lecture est obtenue après activation de l'application 12 et rapprochement physique du terminal 10 et du dispositif 13 (« tap » en anglais) afin que la communication NFC puisse s'établir.

L'application 12 comprend également des moyens pour transmettre du terminal 10 au dispositif NFC 13 l'identité du détenteur du terminal 10. L'application 12 écrit donc l'identité du détenteur du terminal 10 dans le dispositif NFC 31. Cette identité est stockée dans la mémoire 15.

La communication NFC établie par l'application 12 permet donc un échange des identités des titulaires des éléments 10 et 13.

L'application 12 participe également à la génération d'un secret partagé entre les deux personnes, ce secret partagé permettant d'accéder à un espace Internet partagé entre ces deux personnes.

Le secret partagé est par exemple constitué par un identifiant (« login » en anglais) associé à un mot de passe. Le secret partagé est stocké dans le terminal 10 et dans le dispositif NFC 13.

Grâce à ce secret partagé, les deux utilisateurs d'un droit d'accès à un espace Internet partagé entre elles seules, par exemple un compte Flickr (marque déposée). Le secret partagé peut être associé à l'adresse Internet du site proposant cet espace partagé (www.flickr.com par exemple).

Le secret partagé est préférentiellement associé à une référence relative à la mise en relation virtuelle. On entend par « référence relative à la mise en relation » une indication permettant ultérieurement aux deux personnes ayant échangé leurs identités de retrouver l'origine de cette mise en relation virtuelle (échange des identités). Cette origine est par exemple la date à laquelle les personnes ont échangé leurs identités ou le lieu où s'est effectué un tel échange. La date est connue par le terminal 10 et le lieu (par géo-localisation) également.

L'accès à l'espace partagé est avantageusement réalisé de la manière suivante : en ce qui concerne le détenteur du terminal, il peut consulter, grâce à l'application 12, les différents échanges d'identités qu'il a opérés. Ceux-ci sont consultables par date ou par lieu. A l'aide d'un menu déroulant, cette personne peut sélectionner un échange parmi d'autres et accéder directement à l'espace partagé correspondant (via une connexion Internet). Il est également possible pour cette personne d'établir une communication entre son terminal et un ordinateur relié à Internet pour accéder à un espace partagé donné par l'intermédiaire de l'ordinateur.

En ce qui concerne le détenteur du dispositif 13, celui-ci peut accéder à l'espace partagé en approchant le dispositif 13 d'un lecteur de carte ou de tag de type NFC, relié à un ordinateur. Un logiciel installé dans cet ordinateur vient alors lire les différents échanges d'identités opérés et propose à l'utilisateur de sélectionner celui qui l'intéresse, afin d'ouvrir automatiquement l'espace partagé correspondant (connexion automatique au site Internet et remplissage automatique des champs où doivent figurer l'identifiant et le mot de passe pour accéder à l'espace partagé). L'utilisateur peut sélectionner l'échange d'identité qui l'intéresse grâce à la référence relative à la mise en relation virtuelle.

Une fois qu'une des deux personnes a accédé à un espace partagé, elle peut y laisser un message, y poster des documents, etc., ces messages ou documents n'étant consultables que par la personne avec laquelle elle a procédé à un échange d'identités. Les deux personnes disposent alors d'un espace privé où elles peuvent échanger des documents. Le caractère privé de cet espace permet également l'échange de documents confidentiels, puisque son accès est réservé aux seuls titulaires de l'identifiant et du mot de passe associé.

L'application 12 peut générer elle-même, en toute autonomie, l'identifiant et le mot de passe et interroger le site Internet si cet identifiant et mot de passe associé est disponible (déjà affecté à un échange ou non). Si le site Internet constate que l'identifiant et le mot de passe sont disponibles, il en informe l'application 12 qui autorise alors l'écriture de ces données dans le dispositif 13 et le terminal 10. Dans le cas contraire, l'application 12 génère un autre identifiant et/ou mot de passe, par exemple sur une base aléatoire, et recontacte le site Internet et ce jusqu'à ce que ce dernier indique leur disponibilité pour la création d'un nouveau site partagé.

Une autre solution consiste à associer le site Internet à la génération de l'identifiant et du mot de passe: l'application 12 demande au site Internet un identifiant et un mot de passe permettant la création d'un nouveau site partagé et le site Internet transmet un couple identifiant/mot de passe à l'application 12 qui l'enregistre et le transmet au dispositif 13.

Sur la figure 1, le terminal 10 accède à un site 16 via Internet 17, par voie radio.

Le secret partagé peut également être une adresse URL complexe (secrète), du type www.flickr.AEF0xYs4qpmL58%032GtIUBmpawXyz, adresse qui sera ne sera connue que par les personnes ayant échangé leurs identités. L'accès direct à cet URL est réalisé comme précédemment, en sélectionnant le lieu ou la date de rencontre.

Le secret partagé (URL complexe ou identifiant + mot de passe par exemple) peut être généré à partir d'un haché des numéros de téléphones des deux personnes et de l'heure (ou des coordonnées géographiques) à laquelle les échanges d'identité ont eu lieu. On assure ainsi la génération d'un secret partagé unique.

Le secret partagé peut n'être valable que pour une durée déterminée, pas exemple 10 jours, après quoi il deviendra invalide. Dans le cas d'une URL, il est possible de générer une adresse complexe (de type « one time URL », voir https://onetimesecret.com/) qui n'est valable que pour une durée déterminée.

L'application 12 peut également se situer au niveau du terminal 10 et non pas dans l'élément de sécurité 11.

L'échange d'identités peut également s'opérer via NFC entre deux terminaux 10 (tels que celui représenté à la figure 1), au lieu de s'opérer entre un terminal et une carte NFC 13. L'application 12 peut n'être présente qu'au niveau d'un seul des terminaux pour la génération du secret partagé et l'enregistrement de la référence relative à la mise en relation. Dans ce cadre, l'un des terminaux remplit le rôle du tag ou de la carte NFC. Il comprend (dans le terminal ou dans l'UICC associée) une application permettant de répondre à une interrogation provenant de l'autre terminal (interrogation servant à lire une identité) et de transmettre cette identité à l'autre terminal. De même, cette application permet d'écrire dans une mémoire dédiée l'identité de l'autre personne ainsi que le secret partagé. La fonction du tag peut être comprise dans l'UICC et dans ce cas l'UICC émule un tag. Si la fonction du tag est comprise dans le terminal, c'est ce terminal qui se comporte comme un tag.

La figure 2 montre le déroulement du procédé selon la présente invention.

Dans ce schéma, on considère comme précédemment la mise en relation virtuelle de deux personnes, la première des personnes détenant un premier dispositif NFC et la seconde des personnes détenant un second dispositif NFC, l'un des dispositifs NFC étant un terminal de télécommunications comprenant une application, chacun des dispositifs NFC comprenant l'identité de la personne qui la détient.

Dans le cadre du système décrit en référence à la figure 1 et conformément à la figure 2, le terminal de télécommunications 10 comprend l'application conforme à la présente invention et communique avec un dispositif 13 tel qu'une carte NFC.

La première étape qui suit l'activation de l'application est la transmission 20 du premier dispositif NFC (le terminal 10) au second dispositif NFC (la carte 13) de l'identité de la personne détenant le terminal 10. Le second dispositif NFC stocke cette identité et transmet sa propre identité, lors d'une étape 21 au terminal 10 qui la stocke. Les étapes 20 et 21 sont interchangeables.

L'application 12 comprise dans le terminal 10 génère alors (étape 22) un secret partagé entre les deux personnes. Comme indiqué précédemment, ce secret partagé permettant d'accéder à un espace Internet partagé entre les deux personnes. Ce secret partagé est alors transmis (étape 23), avec une référence relative à la mise en relation (date et/ou lieu), du terminal 10 à la carte 13. La carte 13 stocke en mémoire le secret partagé et la référence de la mise en relation virtuelle avec l'identité du détenteur du terminal 10. Réciproquement, le terminal 10 stocke en mémoire le secret partagé et la référence de la mise en relation virtuelle avec l'identité du détenteur de la carte 13.

Dans la description précédente de la figure 2, il a été fait mention de deux dispositifs NFC, l'un d'entre eux étant nécessairement un terminal de télécommunications comprenant l'application selon l'invention. L'autre dispositif NFC est soit une carte NFC ou un tag, soit un autre terminal de télécommunications.

L'invention concerne également un média lisible par ordinateur comprenant un logiciel comprenant des instructions pour permettre une mise en relation virtuelle de deux personnes possédant chacune un dispositif NFC, l'un des dispositifs NFC étant un terminal de télécommunications comprenant l'identité d'une première des personnes, l'autre des dispositifs NFC comprenant l'identité de la seconde des personnes, le logiciel étant destiné à être installé dans le terminal de télécommunications et apte à lire l'identité de la seconde des personnes. Les instructions sont destinées à :
- transmettre du terminal de télécommunications au dispositif NFC l'identité de la première des personnes ;
- participer à la génération d'un secret partagé entre les personnes, le secret partagé permettant d'accéder à un espace Internet partagé entre les personnes ;
- stocker le secret partagé dans le terminal de télécommunications et dans le dispositif NFC, avec une référence relative à la mise en relation virtuelle.

## Revendications

1. Procédé de mise en relation virtuelle de deux personnes, la première desdites personnes détenant un premier dispositif NFC (10) et la seconde desdites personnes détenant un second dispositif NFC (13), l'un desdits dispositifs NFC étant un terminal de télécommunications (10) comprenant une application (12), chacun desdits dispositifs NFC (10, 13) comprenant l'identité de la personne qui le détient, **caractérisé en ce qu'**il consiste à:
- Transmettre (20) dudit premier dispositif NFC (10) audit second dispositif NFC (13) l'identité de ladite première personne ;
- Transmettre (21) dudit second dispositif NFC (13) audit premier dispositif NFC (10) l'identité de ladite seconde personne ;
- Générer (22), à l'aide de ladite application (12), un secret partagé entre lesdites personnes, ledit secret partagé permettant d'accéder à un espace Internet partagé entre lesdites personnes;
- Stocker (23) ledit secret partagé dans lesdits dispositifs NFC (10, 13), avec une référence relative à ladite mise en relation virtuelle.

2. Procédé selon la revendication 1, **caractérisé en ce que** ladite référence relative à ladite mise en relation virtuelle est la date à laquelle lesdites personnes ont échangé leurs identités.

3. Procédé selon la revendication 1, **caractérisé en ce que** ladite référence relative à ladite mise en relation virtuelle est le lieu où lesdites personnes ont échangé leurs identités.

4. Procédé selon la revendication 1, **caractérisé en ce que** ledit terminal de télécommunications est un terminal mobile (10).

5. Procédé selon l'une des revendications 1 à 4, **caractérisé en ce que** ledit secret partagé est un identifiant associé à un mot de passe.

6. Terminal de télécommunications (10) comprenant une application (12) destinée à permettre une mise en relation virtuelle de deux personnes, ledit terminal de télécommunications (10) comprenant l'identité d'une première desdites personnes, **caractérisé en ce que** ladite application est apte à lire l'identité de la seconde desdites personnes, ladite identité de ladite seconde desdites personnes étant stockée dans un dispositif NFC (13), ladite application comprenant des moyens pour :
- transmettre dudit terminal de télécommunications (10) audit dispositif NFC (13) l'identité de ladite première desdites personnes ;
- participer à la génération d'un secret partagé entre lesdites personnes, ledit secret partagé permettant d'accéder à un espace Internet partagé entre lesdites personnes;
- stocker ledit secret partagé dans ledit terminal de télécommunications (10) et dans ledit dispositif NFC (13), avec une référence relative à ladite mise en relation virtuelle.

7. Terminal selon la revendication 6, **caractérisé en ce que** ladite référence relative à ladite mise en relation virtuelle est la date à laquelle lesdites personnes ont échangé leurs identités.

8. Terminal selon la revendication 6, **caractérisé en ce que** ladite référence relative à ladite mise en relation virtuelle est le lieu où lesdites personnes ont échangé leurs identités.

9. Terminal selon l'une des revendications 6 à 8, **caractérisé en ce que** ledit secret partagé est un identifiant associé à un mot de passe.

10. Média lisible par ordinateur comprenant un logiciel comprenant des instructions pour permettre une mise en relation virtuelle de deux personnes possédant chacune un dispositif NFC (10, 13), l'un desdits dispositifs NFC étant un terminal de télécommunications (10) comprenant l'identité d'une première desdites personnes, l'autre desdits dispositifs NFC (13) comprenant l'identité de la seconde desdites personnes, ledit logiciel étant destiné à être installé dans ledit terminal de télécommunications (10) et apte à lire l'identité de la seconde desdites personnes, **caractérisé en ce que** lesdites instructions sont destinées à:
- transmettre dudit terminal de télécommunications (10) audit dispositif NFC (13) l'identité de ladite première desdites personnes ;
- participer à la génération d'un secret partagé entre lesdites personnes, ledit secret partagé permettant d'accéder à un espace Internet partagé entre lesdites personnes ;
- stocker ledit secret partagé dans ledit terminal de télécommunications (10) et dans ledit dispositif NFC (13), avec une référence relative à ladite mise en relation virtuelle.

## Patentansprüche

1. Verfahren zur Herstellung einer virtuellen Verbindung zwischen zwei Personen, wobei die erste dieser Personen ein erstes NFC-Gerät (10) und die zweite dieser Personen ein zweites NFC-Gerät (13) besitzt, wobei eines der besagten NFC-Geräte ein Telekommunikationsterminal (10) mit einer Applikation (12) ist, und jedes der NFC-Geräte (10, 13) die Identität der Person, welche es besitzt, enthält, **dadurch gekennzeichnet, dass** es darin besteht:
- die Identität der besagten ersten Person von besagtem ersten NFC-Gerät (10) auf das zweite NFC-Gerät (13) zu übertragen (20);
- die Identität besagter zweiten Person von besagtem zweiten NFC-Gerät (13) auf das erste NFC-Gerät (10) zu übertragen (21);
- mit Hilfe besagter Applikation (12) einen, besagten Personen gemeinsamen geheimen Schlüssel zu generieren (22), wobei besagter gemeinsamer geheimer Schlüssel den Zugriff auf einen den besagten Personen gemeinsamen Internetbereich ermöglicht.
- besagten geheimen Schlüssel in besagten NFC-Geräten (10, 13) mit einer Referenz in Bezug auf die besagte Herstellung einer virtuellen Verbindung zu speichern (23).

2. Verfahren nach Anspruch 1, **dadurch gekennzeichnet, dass** besagte Referenz in Bezug auf besagte Herstellung einer virtuellen Verbindung das Datum ist, an dem besagte Personen ihre Identitäten ausgetauscht haben.

3. Verfahren nach Anspruch 1, **dadurch gekennzeichnet, dass** besagte Referenz in Bezug auf besagte Herstellung einer virtuellen Verbindung der Ort ist, an dem besagte Personen ihre Identitäten ausgetauscht haben.

4. Verfahren nach Anspruch 1, **dadurch gekennzeichnet, dass** besagtes Telekommunikationsterminal ein mobiles Terminal (10) ist.

5. Verfahren nach einem der Ansprüche 1 bis 4, **dadurch gekennzeichnet, dass** besagter gemeinsamer geheimer Schlüssel eine Kennung ist, die mit einem Passwort verknüpft ist.

6. Telekommunikationsterminal (10) mit einer Applikation (12), die dazu bestimmt ist, die Herstellung einer virtuellen Verbindung zwischen zwei Personen zu ermöglichen, wobei besagtes Telekommunikationsterminal (10) die Identität der ersten dieser Personen enthält, **dadurch gekennzeichnet, dass** besagte Applikation in der Lage ist, die Identität der zweiten dieser Personen zu lesen, wobei besagte Identität der zweiten dieser besagten Personen in einem NFC-Gerät(13) gespeichert wird und besagte Applikation Mittel umfasst, um
- die Identität der besagten ersten Person von besagtem Telekommunikationsterminal (10) auf besagtes NFC-Gerät (13) zu übertragen;
- an der Generierung eines gemeinsamen geheimen Schlüssels zwischen besagten Personen mitzuwirken, wobei besagter gemeinsamer geheimer Schlüssel den Zugang zu einem besagten Personen gemeinsamen Internetbereich ermöglicht;
- besagten gemeinsamen geheimen Schlüssel in besagtem Telekommunikationsterminal (10) und in besagtem NFC-Gerät (13) mit einer Referenz über die besagte Herstellung einer virtuellen Verbindung zu speichern.

7. Terminal nach Anspruch 6, **dadurch gekennzeichnet, dass** besagte Referenz in Bezug auf besagte Herstellung einer virtuellen Verbindung das Datum ist, an dem besagte Personen ihre Identitäten ausgetauscht haben.

8. Terminal nach Anspruch 6, **dadurch gekennzeichnet, dass** besagte Referenz für besagte Herstellung einer virtuellen Verbindung der Ort ist, an dem die Personen ihre Identitäten ausgetauscht haben.

9. Terminal nach einem der Ansprüche 6 bis 8, **dadurch gekennzeichnet, dass** besagter gemeinsamer geheimer Schlüssel eine Kennung ist, die mit einem Passwort verknüpft ist.

10. Per Computer lesbares Medium mit einer Software, welche die Anweisungen zum Herstellen einer virtuellen Verbindung zwischen zwei Personen mit jeweils einem NFC-Gerät (10, 13) enthält, wobei eines der NFC-Geräte ein Telekommunikationsterminal (10) ist, das die Identität der ersten der besagten Personen enthält, und das andere ein NFC-Gerät (13), das die Identität der zweiten der besagten Personen enthält, wobei die Software dazu bestimmt ist, in besagtem Telekommunikationsterminal (10) installiert zu werden und in der Lage ist, die Identität der zweiten Person zu lesen, **dadurch gekennzeichnet, dass** besagte Anweisungen dazu bestimmt sind:
- die Identität der ersten der besagten Personen von besagtem Telekommunikationsterminal (10) auf das NFC-Gerät (13) zu übertragen;
- an der Generierung eines gemeinsamen, geheimen Schlüssels zwischen besagten Personen mitzuwirken, wobei besagter gemeinsamer geheimer Schlüssel den Zugang zu einem, den beiden Personen gemeinsamen Internetbereich ermöglicht;
- besagten gemeinsamen geheimen Schlüssel in besagtem Telekommunikationsterminal (10) und in besagtem NFC-Gerät (13) mit einer Referenz in Bezug auf die Herstellung einer virtuellen Verbindung zu speichern.

## Claims

1. A method for virtually connecting two people, with the first one of said persons having a first NFC device (10) and the second one of said persons having a second NFC device (13), with one of said NFC devices being a telecommunications terminal (10) comprising an application (12), with each one of said NFC devices (10, 13) comprising the identity of the person which it belongs to, **characterized in that** it comprises:
- transmitting (20) the identity of said first person from the first NFC device (10) to the second NFC device (13);
- transmitting (21) the identity of said second person from the second NFC device (13) to the first NFC device (10);
- generating (22) a secret shared by said persons using said application (12), with the shared secret giving access to an Internet space shared by said persons;
- storing (23) said shared secret in said NFC devices (10, 13), with a reference relating to said virtual connection of the devices.

2. A method according to claim 1, **characterized in that** said reference relating to said virtual connection is the date on which said persons exchanged identities.

3. A method according to claim 1, **characterized in that** said reference relating to said virtual connection is the place where said persons exchanged identities.

4. A method according to claim 1, **characterized in that** said telecommunications terminal is a mobile terminal (10).

5. A method according to one of claims 1 to 4, **characterized in that** said shared secret is an identifier associated with a password.

6. A telecommunication terminal (10) comprising an application (12) intended to enable a virtual connection of two people, with said telecommunications terminal (10) comprising the identity of a first one of said persons, **characterized in that** said application is adapted to read the identity of the second one of said persons, with said identity of said second one of said persons being stored in a NFC device (13), with said application comprising means for:
- transmitting the identity of said first one of said persons from said telecommunications terminal (10) to said NFC device (13);
- participating in the generation of a secret shared by said persons, with said shared secret giving access to an Internet space shared by said persons;
- storing said shared secret in said telecommunications terminal (10) and in said NFC device (13), with a reference relating to said virtual connection.

7. A terminal according to claim 6, **characterized in that** said reference relating to said virtual connection is the date on which said persons exchanged identities.

8. A terminal according to claim 6, **characterized in that** said reference relating to said virtual connection is the place where said persons exchanged identities.

9. A terminal according to one of claims 6 to 8, **characterized in that** said shared secret is an identifier associated with a password.

10. A computer readable media including software comprising instructions to enable a virtual connection of two people, with each person having a NFC device (10, 13), with one of said NFC devices being a telecommunications terminal (10) comprising the identity of a first one of said persons, with the other one of said NFC devices (13) comprising the identity of the second one of said persons, with said software being intended to be installed in said telecommunication terminal (10) and adapted to read the identity of the second one of said persons, **characterized in that** said instructions are intended for:
- transmitting the identity of said first one of said persons from said telecommunications terminal (10) to said NFC device (13);
- participating in the generation of a secret shared by said persons, with said shared secret giving access to an Internet space shared by said persons;
- storing said shared secret in said telecommunications terminal (10) and in said NFC device (13), with a reference relating to said virtual connection.
